# DEMANDE DE BREVET EUROPEEN

(11) **EP 1 720 126 A1**
(43) Date de publication de la demande: **08.11.2006**
(21) Numéro de dépôt: 06300254.7
(22) Date de dépôt: 21.03.2006
(51) Int. Cl.: G06Q 30/00

(54) **Plateforme de distribution de contenus multimedia et procédé de réalisation d'une telle plateforme**

(30) Priorité: 03.05.2005 FR 0504508
(71) Demandeur: Digiplug, 75010 Paris (FR)
(72) Inventeur: Lacroix, Boris, PARIS 75016 (FR); Girolami, Philippe, PARIS 75015 (FR); Muyal, Hervé, PARIS 75009 (FR); Decaux, Marie-Anne, PARIS 75015 (FR)
(74) Mandataire: Grynwald, Albert

(57) **Abrégé**

L'invention concerne une plateforme de distribution de contenus multimédias vers des terminaux de téléphonie mobile qui comporte :
- des moyens pour se connecter à au moins un élément, appelé entrepôt (14₁, 14₂...), dans lequel sont stockés des contenus multimédia destinés à des terminaux de téléphonie mobile, ces contenus étant du type logos, sonneries, chansons, musiques, paroles, programmes, images ou vidéo, programmes audiovisuels, chaque contenu étant stocké sous une pluralité de formes afin de pouvoir être livré à une pluralité correspondante de types de terminaux de téléphonie mobile, l'entrepôt comprenant un organe de recherche de contenu multimédia dans l'entrepôt,
- au moins un élément, appelé magasin (16), destiné à contenir des contenus multimédia provenant de l'entrepôt et comportant des moyens pour que ces contenus puissent être distribués à une pluralité de type de terminaux de téléphonie mobile, et
- au moins un organe de transport pour transporter des contenus multimédia sélectionnés, sous leurs divers formats, d'un entrepôt vers un magasin.

## Description

L'invention est relative à une plateforme de distribution de contenus multimédia vers des terminaux de téléphonie mobile.

Par contenus multimédia, on entend des images, des logos, des textes, des sons tels que sonneries, chansons ou musiques, de la vidéo et des programmes, par exemple des programmes de jeux, ou des contenus audiovisuels.

La vente dite en ligne est un moyen de distribution couramment pratiqué aujourd'hui. Ainsi, des consommateurs peuvent télécharger, à partir de sites sur serveur Internet ou WAP des sonneries ou même des musiques ou des images, notamment des vidéos et des programmes audiovisuels.

Ces sites affichent une page d'accueil avec diverses présentations de produits que les consommateurs peuvent télécharger, en général moyennant paiement.

L'invention part de la constatation que l'approvisionnement de tels magasins en ligne constitue une opération complexe. Elle part aussi de la constatation que la réalisation et/ou le fonctionnement de tels magasins en ligne nécessitent à chaque fois des études particulières relativement coûteuses.

L'invention a pour but de fournir des moyens de gestion et de distribution de contenus multimédia pour terminaux de téléphonie mobile qui soient d'une particulière simplicité d'utilisation tant pour les divers acteurs de la chaîne de distribution et de production que pour les consommateurs.

A cet effet, la plateforme conforme à l'invention comporte :
- des moyens pour se connecter à au moins un élément, appelé entrepôt, dans lequel sont stockés des contenus multimédia destinés à des terminaux de téléphonie mobiles, ces contenus étant du type logos, sonneries, chansons, musiques, paroles, programmes, images ou vidéos, chaque contenu étant stocké sous une pluralité de formes afin de pouvoir être livré à une pluralité correspondante de types de terminaux de téléphonie mobile, l'entrepôt contenant un organe de recherche de contenus multimédia dans l'entrepôt,
- au moins un élément, appelé magasin, destiné à contenir soit des contenus multimédia copiés de l'entrepôt, soit une représentation de contenus multimédia stockés dans l'entrepôt, cette représentation étant liée aux contenus dans l'entrepôt, et comportant des moyens pour que ces contenus puissent être distribués à une pluralité de types de terminaux de téléphonie mobile, et
- au moins un organe pour transporter des contenus multimédia sélectionnés, sous leurs divers formats, d'un entrepôt vers un magasin.

Avec cette plateforme, les acteurs de la distribution disposent d'un outil particulièrement ergonomique pour distribuer des contenus multimédia, les magasins pouvant être approvisionnés en temps réel en contenus.

Dans une réalisation préférée, au moins certains des contenus multimédia sont sous plusieurs qualités, par exemple, dans le cas des sonneries, trois qualités : monophonie, polyphonie et son réel.

Dans ce cas, un organe de consultation dans l'entrepôt est tel qu'il permette la présentation selon la qualité sélectionnée.

Dans une réalisation, l'entrepôt, l'organe de transport et le magasin se trouvent sur un même site.

Mais, l'entrepôt, ou les entrepôts, l'organe de transport et le, ou les, magasin(s) peuvent se trouver tous, ou certains d'entre eux, sur des sites différents et connectés entre eux par un réseau de télécommunications. Par exemple, l'organe de transport est, dans une réalisation, installé chez un ayant droit de contenus multimédias pour lui permettre de contrôler la distribution de contenus pour lesquels il dispose des droits de distribution.

Dans une réalisation, l'organe de transport comporte des moyens pour que le transfert de contenus multimédias de l'entrepôt vers le magasin s'effectue en temps réel et de façon automatique en fonction de critères présélectionnés. Ces critères présélectionnés sont, par exemple, compris dans le groupe comportant : la nouveauté d'apparition du contenu dans l'entrepôt, le succès de vente, une date présélectionnée, le niveau de qualité, notamment le format des contenus. De préférence, cette sélection automatique nécessite une action manuelle pour que le transfert se réalise effectivement.

En outre, les transferts automatiques s'effectuent, dans une réalisation, de façon périodique, par exemple sur une base quotidienne, hebdomadaire ou mensuelle.

Dans une réalisation, le magasin comporte des moyens pour fournir des indicateurs relatifs à la distribution des contenus. Ces indicateurs sont, par exemple, compris dans le groupe comportant : le nombre de distributions d'un contenu déterminé sur une période présélectionnée, le nombre de contenus d'une catégorie déterminée distribuée sur une période présélectionnée, la variation du nombre de distributions d'un contenu déterminé ou d'une catégorie déterminée par rapport à une période précédente, le nombre total de distributions sur une période déterminée, la variation de ce nombre par rapport à une période précédente, la part, par exemple en pourcentage, de la distribution de chaque contenu ou catégorie par rapport au nombre total de distributions, le nombre total de consultations des contenus du magasin par les consommateurs, le nombre de consultations de chaque contenu, la part de consultations de chaque contenu ou catégorie par rapport au nombre total de consultations, et un paramètre représentant, pour chaque contenu ou catégorie de contenus, le rapport entre le nombre de consultations et le nombre de distributions.

Dans une réalisation, le magasin comporte des moyens pour produire des alertes à partir d'au moins certains des indicateurs. Par exemple, une alerte sera produite quand un contenu est consulté fréquemment mais peu distribué.

Dans une réalisation, le magasin comporte des moyens pour effectuer au moins une des actions suivantes : ajouter des contenus, supprimer des contenus, déplacer des contenus d'une catégorie dans une autre, copier un contenu déjà présent dans une catégorie vers une autre catégorie, modifier l'ordre de présentation des contenus, établir une date à partir de laquelle un contenu sera présenté dans le magasin, remplir une zone de présentation pour mettre en évidence, c'est-à-dire favoriser, certains contenus.

Dans une réalisation, le magasin comporte des moyens pour présenter des résultats de type financier relatifs au magasin, à partir de données relatives aux dépenses effectuées par le titulaire du magasin et aux recettes de ce titulaire.

Dans une réalisation, le magasin comporte des moyens pour déterminer des données relatives aux distributions effectuées par type de terminal mobile.

Selon un mode de réalisation, le magasin comporte des moyens pour établir un profil de chaque consommateur en fonction de ses acquisitions et, à partir de ce profil, proposer des contenus ou catégories de contenus.

L'invention concerne ainsi, de façon générale, une plateforme de distribution de contenus multimédias vers des terminaux de téléphonie mobile comportant :
- des moyens pour se connecter à au moins un élément, appelé entrepôt, dans lequel sont stockés des contenus multimédia destinés à des terminaux de téléphonie mobile, ces contenus étant du type logos, sonneries, chansons, musiques, paroles, programmes, images ou vidéo, programmes audiovisuels, chaque contenu étant stocké sous une pluralité de formes afin de pouvoir être livré à une pluralité correspondante de types de terminaux de téléphonie mobile, l'entrepôt comprenant un organe de recherche de contenu multimédia dans l'entrepôt,
- au moins un élément, appelé magasin, destiné à contenir des contenus multimédia provenant de l'entrepôt et comportant des moyens pour que ces contenus puissent être distribués à une pluralité de type de terminaux de téléphonie mobile, et
- au moins un organe de transport pour transporter des contenus multimédia sélectionnés, sous leurs divers formats, d'un entrepôt vers un magasin.

Selon une réalisation, au moins certains des contenus multimédias sont stockés sous plusieurs niveaux de qualité. L'organe de transport est par exemple tel qu'il transfère chaque contenu multimédia sous ses divers niveaux de qualité.

Dans une réalisation, l'organe de transport est tel qu'il comporte des moyens pour que le transfert de contenus multimédia de l'entrepôt vers le magasin s'effectue en temps réel et de façon automatique en fonction de critères présélectionnés, ce transfert automatique étant de préférence effectué après confirmation par un opérateur.

Dans une réalisation, la plateforme comporte des moyens pour fournir des indicateurs relatifs à la distribution des contenus vers les terminaux de téléphonie mobile, ces indicateurs étant compris dans le groupe comportant : le nombre de distributions d'un contenu déterminé sur une période présélectionnée, le nombre de contenus d'une catégorie déterminée distribuée sur une période présélectionnée, la variation d'un nombre de distributions d'un contenu déterminé ou d'une catégorie déterminée par rapport à une période précédente, le nombre total de distributions sur une période déterminée, la variation de ce nombre par rapport à une période précédente, la part de la distribution de chaque contenu ou catégorie par rapport au nombre total de distributions, le nombre total de consultations des contenus du magasin par les consommateurs, le nombre de consultations de chaque contenu, la part de consultation de chaque contenu ou catégorie par rapport au nombre total de consultations, et un paramètre représentant, pour chaque catégorie ou catégorie de contenus, le rapport entre le nombre de consultations et le nombre de distributions.

Le magasin comporte par exemple des moyens pour produire des alertes à partir d'au moins certains des indicateurs.

Selon une réalisation, le magasin comporte des moyens pour effectuer au moins une des actions suivantes : ajouter des contenus, supprimer des contenus, déplacer des contenus d'une catégorie dans une autre, copie un contenu déjà présent dans une catégorie vers une autre catégorie, modifier l'ordre de présentation des contenus, établir une date à partir de laquelle un contenu sera présenté dans le magasin, et remplir une zone de présentation pour mettre en évidence certains contenus.

Dans une réalisation, le magasin comporte des moyens pour déterminer des données relatives aux distributions effectuées par type de terminal mobile.

La plateforme comporte, dans une réalisation, des moyens pour recevoir un identifiant représentant le titulaire d'un terminal mobile et des moyens pour établir un profil de chaque consommateur en fonction des consultations ou acquisitions précédentes.

La plateforme comprend par exemple une base de données dans laquelle sont stockés des profils de consommateurs avec les identifiants correspondants des terminaux mobiles et des moyens dans le magasin pour émettre vers les terminaux mobiles pour lesquels un profil a été établi, une information sur des produits correspondant au profil.

Selon une réalisation, chaque magasin comporte des moyens pour permettre son accès par des terminaux de téléphonie mobile, ces moyens d'accès comprenant :
- une base de données contenant tous les types de sites et tous les contextes techniques par lesquels le magasin est accessible,
- des moyens pour déterminer le type de cible et le contexte technique sélectionnés par le terminal mobile en fonction des informations fournies par le terminal mobile lors de l'appel, et
- des moyens pour extraire de la base de données les informations relatives au type de cible et au contexte technique sélectionnés par le terminal mobile ;
les types de sites étant les gabarits qui s'affichent sur les écrans des terminaux mobiles et l'arborescence de navigation par laquelle le terminal mobile accède aux produits en magasin,
le contexte technique comprenant au moins un des éléments du groupe qui comporte : l'ensemble des contraintes se rapportant à l'ergonomie du magasin par rapport aux terminaux supportés ; les contraintes techniques liées au langage de description de pages pour les terminaux supportés ; le système de facturation des terminaux mobiles ; le mécanisme de distribution de contenus ; les terminaux supportés, et les mécanismes de compte rendu aux opérateurs de téléphonie mobile.

L'invention concerne aussi un procédé pour la création de magasins pour une plateforme définie ci-dessus dans lequel on fournit une base de données dans laquelle sont stockés :
- des architectures d'organisation de magasin,
- des types de sites,
- des contextes techniques de magasin,
et on sélectionne l'architecture, le type de site et le contexte technique dans cette base de données,
les types de sites étant les gabarits qui s'affichent sur les écrans des terminaux mobiles et l'arborescence de navigation par laquelle le terminal mobile accède aux produits en magasin,
le contexte technique comprenant au moins un des éléments du groupe qui comporte : l'ensemble des contraintes se rapportant à l'ergonomie du magasin par rapport aux terminaux supportés ; les contraintes techniques liées au langage de description de pages pour les terminaux supportés ; le système de facturation des terminaux mobiles ; le mécanisme de distribution de contenus ; les terminaux supportés, et les mécanismes de compte rendu aux opérateurs de téléphonie mobile.

D'autres caractéristiques et avantages de l'invention apparaîtront avec la description de certains de ses modes de réalisation, celle-ci étant effectuée en se référant aux dessins ci-annexés sur lesquels :

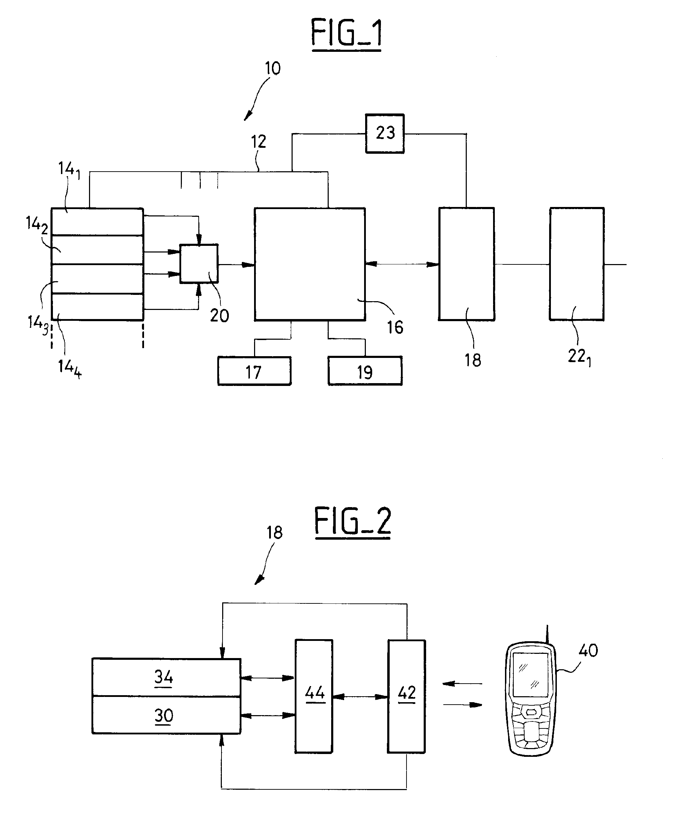

les figures 1 et 2 sont des schémas de modes de réalisation de certains éléments de l'invention.

L'exemple de plateforme que l'on va décrire en relation avec la figure 1 est une plateforme constituant un serveur géré par un organisme distributeur de contenus multimédia pour un ensemble d'acteurs tels que des éditeurs de contenus.

Ainsi, la plateforme 10 représentée sur la figure 1 est reliée à un réseau de télécommunications 12. Elle comporte une série d'entrepôts 14₁, 14₂, 14₃, 14₄ dont chacun contient l'ensemble du stock de contenus multimédias à distribuer d'un éditeur particulier.

Les entrepôts 14ᵢ sont destinés à alimenter un ou plusieurs magasins 16. Ce dernier est relié par une interface 18 au(x) réseau(x) de téléphonie mobile afin de distribuer des contenus multimédias à des terminaux de téléphonie mobile de tous types et par l'intermédiaire des divers opérateurs exerçant dans ce (s) réseau (x) .

Pour permettre le transfert des entrepôts 14ᵢ vers le magasin 16, on prévoit un organe de transport 20.

Il est précisé que dans une variante, ces entrepôts ne font pas partie de la plateforme mais sont reliés à cette dernière par le réseau 12.

### Les entrepôts 14ᵢ

Chacun d'eux stocke les contenus multimédia à distribuer. Chacun de ces contenus est présenté sous plusieurs niveaux de qualité. Par exemple, pour des contenus de type chanson, on prévoit trois niveaux de qualité, à savoir, un niveau de monophonie, un niveau de polyphonie et un niveau de « son réel », c'est-à-dire du type reproduisant un extrait d'un morceau original, identique à la source. A chacune de ces qualités est associé un prix.

En outre, chacun des contenus, dans chacune des qualités, est formaté pour pouvoir être transféré vers les divers types de terminaux de téléphonie mobile.

Chaque entrepôt est, par exemple, accessible par le réseau Internet, notamment pour l'éditeur qui gère les contenus de ces entrepôts et pour les titulaires des magasins 16. On précise ici, cependant, que l'accès à l'entrepôt est filtré en fonction de droits d'accès.

Les personnes ayant accès à ces entrepôts disposent d'une interface graphique comportant, d'une part, une zone de recherche, c'est-à-dire une case dans laquelle on peut inscrire la description d'un contenu recherché et, d'autre part, des moyens de consultation des contenus avec la qualité déterminée présélectionnée. Cette interface comporte aussi une zone d'informations que chaque éditeur veut communiquer au titulaire du (des) magasin(s) telles que les nouveautés, les meilleures ventes en magasin(s) ou par type de mobile. Chaque entrepôt comporte aussi une zone destinée à chaque titulaire de magasin pour lui permettre d'accéder rapidement aux nouveautés ou aux commandes passées.

### L'organe de transport 20

La fonction de cet organe est d'extraire, par copie, des contenus se trouvant dans les entrepôts pour les installer dans le magasin 16. On précise ici que, bien entendu, les contenus transportés de l'entrepôt vers un magasin restent toujours dans l'entrepôt.

Ainsi, l'organe 20 effectue une copie qu'il transporte vers le magasin 16.

Dans une variante, l'organe 20 copie des représentations des contenus tels que des données relatives au titre, à l'interprète mais non le contenu multimédia proprement dit pour lequel une connexion directe de l'entrepôt vers le magasin est effectuée pour le compte du consommateur (téléphone mobile) effectuant un achat dans un magasin.

En variante encore, une connexion directe est établie pour ces contenus multimédia entre l'entrepôt et le consommateur final.

Dans l'exemple, les contenus (ou leur représentation) sont transportés en blocs, avec toutes les qualités et tous les formats des terminaux cibles.

Pour l'utilisateur, par exemple un professionnel gérant de magasins, l'organe 20 se présente, comme l'entrepôt 14ᵢ, sous forme d'une interface graphique. Cette interface graphique comporte une zone relative aux entrepôts et une zone relative aux magasins.

Comme dans un magasin physique, les magasins comportent des rayons, c'est-à-dire des catégories telles que pop, rock, etc., ou des chanteurs, l'organe 20 permettant le transfert vers un rayon.

Le transfert de l'entrepôt vers le magasin peut aussi s'effectuer de façon automatique sur une base régulière et/ou selon des critères présélectionnés.

Ainsi, dans une réalisation, on transfère de façon automatique les contenus de l'entrepôt, ou des entrepôts, vers un (des) magasin(s) sur la base de données fournies par un (des) magasin(s) telles que les meilleurs ventes. Le transfert s'effectue, par exemple, quotidiennement. On peut aussi effectuer des transferts de façon automatique à l'occasion d'événements prévus à l'avance, comme des concerts ou des fêtes.

L'organe de transport est doté de moyens de vérification des droits d'accès et de moyens de filtrage pour empêcher le transfert de l'entrepôt vers le magasin si des droits n'ont pas été accordés.

### Outil 19 de création de magasins 16

Pour permettre une installation rapide d'un magasin en ligne, notamment sur le réseau WAP, l'invention, selon un autre de ses aspects, prévoit un outil de création de magasins qui comporte, d'une part, une série d'architectures préprogrammées d'organisation du magasin, c'est-à-dire les rayons comme mentionné ci-dessus et, d'autre part, un ensemble de types de site.

Par type de site, on entend les gabarits qui devront s'afficher sur les écrans des consommateurs et l'arborescence de navigation par laquelle le consommateur accède aux produits en magasin.

En outre, l'outil de création de magasin comporte des éléments permettant de tenir compte des contraintes imposées par chaque contexte technique.

On entend ici par « contexte technique » au moins un des éléments du groupe comportant :

L'ensemble des contraintes se rapportant à l'ergonomie du magasin par rapport aux terminaux supportés ; les contraintes techniques liées au langage de description de pages pour les terminaux supportés ; le système de facturation du consommateur ; le mécanisme de distribution de contenus ; les terminaux supportés et les mécanismes de compte rendu aux opérateurs.

Par « contrainte se rapportant à l'ergonoe » on entend ici les obligations imposées par les opérateurs aux éditeurs de sites concernant la mise en page, l'aspect des pages et la structure de navigation d'un site. L'aspect des pages comprend par exemple la police de caractère, les graphismes, les couleurs et le style.

Le choix de l'architecture, le choix du type de site et le choix du contexte technique entraînent que chaque page s'affichant sur les terminaux mobiles a une configuration et un aspect qui dépendent des paramètres correspondant à ces choix. De façon plus précise, chaque page qui doit être affichée sur un terminal comporte des sections qui sont notamment un en-tête dépendant seulement du contexte technique, un en-tête de magasin, un corps de page, un pied de page dépendant seulement du contexte technique et un pied de page de magasin. Ainsi, le contenu des sections dépendra de la charte graphique imposée par le type de site et/ou par le contexte technique.

De façon générale, l'invention fournit une interface 19 permettant de minimiser le temps de création d'un magasin grâce à une base de données contenant des gabarits pour les différents types de site et pour les divers contextes techniques possibles.

Les gabarits sont prévus pour les divers terminaux. L'interface 19 permet toutes les combinaisons possibles entre types de site et contextes techniques.

### Interface utilisateur 17

On prévoit une interface utilisateur (professionnel) 17 qui permet de sélectionner un magasin 16. Cette interface 17 permet aussi d'effectuer toutes les opérations autorisées par des utilisateurs professionnels et pour ce magasin dans l'entrepôt 14ᵢ et l'organe de transport 20.

L'interface 17 permet de modifier la configuration d'un magasin et de pré-visualiser le résultat. Elle permet de confirmer ces modifications et de les rendre visibles par l'interface 18, afin de les appliquer au magasin 16.

### Le magasin 16

Comme dans un magasin réel, on prévoit des rayons correspondant à des catégories et/ou à des genres et/ou à des contenus spécifiques et/ou à des interprètes. On prévoit aussi des rubriques nouveautés et meilleures ventes.

Pour permettre de modifier l'organisation en temps réel, un magasin comporte des moyens pour établir des indicateurs de tendances qui indiquent, pour chaque produit, catégorie, genre, etc., l'évolution de la distribution.

Ainsi, le magasin comporte des moyens pour mémoriser et comptabiliser les ventes et pour comparer les ventes effectuées sur une période avec les ventes effectuées sur la période précédente. On prévoit aussi un moyen pour déterminer la contribution de chaque produit, ou catégorie de produits, au total des ventes.

Le magasin comporte des moyens pour fournir une indication sur la contribution de chaque contenu ou catégorie de contenus au nombre total de visites.

Le magasin comporte, outre des moyens pour fournir des indicateurs, des moyens pour fournir des alertes correspondant à des comparaisons entre indicateurs. Ces alertes sont également présentées par l'interface 17. Elles peuvent aussi être envoyées aux utilisateurs par des moyens de communications tels que SMS, courrier électronique.

Par exemple, si pour un contenu déterminé, le nombre de visites est important alors que le nombre de ventes est faible, une alerte sera produite. Cette situation peut, par exemple, se produire si le contenu n'est pas classé dans la bonne catégorie.

Une alerte peut également être produite si les ventes baissent.

La modification de l'approvisionnement du magasin, sous la commande de l'interface 17, peut s'effectuer de diverses manières telles que l'ajout de contenus par transfert depuis l'entrepôt, la suppression de contenus, le déplacement de contenus d'une catégorie dans une autre, ou la simple copie dans une autre catégorie.

L'ordre de présentation des contenus est modifiable sous la commande de l'interface 17.

Des moyens, se trouvant dans l'interface 17, sont prévus pour mettre en réserve des contenus et les rendre disponibles de façon automatique à une date déterminée, correspondant, par exemple, à celle d'un lancement de titre.

Le magasin comporte également, de façon classique, des zones de saisie pour afficher ou mettre en évidence, certains produits. Ces zones dédiées à la mise en avant de produits peuvent être alimentées de manière automatique, de telle sorte que l'utilisateur professionnel n'a aucune action manuelle à effectuer. La mise à jour de ces zones s'effectue sur la base de critères configurés préalablement par l'utilisateur professionnel. Ces critères sont par exemple un produit ou un type de produits.

Le magasin comporte des moyens pour établir un profil de consommateur, c'est-à-dire déterminer le type de commandes ou de visites effectuées, et des moyens sont prévus pour proposer automatiquement des nouveautés du magasin ou produits attractifs pour un type de consommateur en fonction de son profil. Cette disposition implique que les terminaux, ou les opérateurs ou les consommateurs fournissent un identifiant permettant de reconnaître les consommateurs à chaque connexion. Les consommateurs peuvent également exprimer leurs préférences et attentes via des modules d'alerte. Par exemple les consommateurs peuvent s'inscrire à une alerte pour recevoir par SMS tous les nouveaux produits ajoutés au magasin. Cette expression volontaire des préférences permet d'adapter au mieux les contenus proposés par le magasin aux utilisateurs ou types d'utilisateurs se connectant au magasin.

Les profils d'utilisateurs sont mis en mémoire dans une base de données 23 et cette base de données est utilisées à chaque connexion par l'interface 18 afin d'adapter les zones de saisie à chaque consommateur qui se connecte à l'aide de son téléphone mobile. Autrement, les zones de mise en évidence de produits sont personnalisables en fonction des profils mis en mémoire dans la base de données 23. A cet effet, l'interface 18 identifie le consommateur et donc son profil et le magasin est tel qu'il met en avant les produits correspondant au profil du consommateur qui se connecte en transmettant les informations de profil se trouvant dans la base 23 au magasin 16.

### L'interface 18

L'interface 18 est accessible directement aux téléphones des consommateurs, par exemple par un portail 22₁ d'un opérateur (figure 1). En variante, l'accès s'effectue à travers un serveur de l'opérateur qui joue le rôle d'intermédiaire entre l'interface 18 et le téléphone du consommateur.

Quand un terminal se connecte à l'interface 18, il fournit un identifiant de magasin 16 et un identifiant de contexte technique. Dans ces conditions, le contenu commandé ou visualisé pourra être fourni selon le protocole propre à l'opérateur et au terminal. En outre, le terminal fournit des informations permettant de l'identifier et d'en déduire ses caractéristiques telles que le nombre de pixels de son écran ou le langage supporté.

De façon générale, le magasin 16 reçoit des informations sur le type de terminal et sur l'opérateur. Dans ces conditions, le magasin adapte, en fonction du terminal et de l'opérateur, les informations à transmettre et la cinématique de transmission, c'est-à-dire l'enchaînement des opérations que le consommateur doit effectuer pour acheter du contenu.

### Description détaillée de l'interface 18 (figure 2)

L'interface 18 comporte deux blocs, à savoir un bloc 30 contenant tous les types de site (notamment les gabarits) et un bloc 34 comprenant tous les contextes techniques.

Comme montré sur la figure 2, les connexions provenant d'un terminal 40 sont prises en charge par un contrôleur ou routeur 42 qui est connecté à un générateur 44 de description de page, ce générateur étant lui-même relié, d'une part, au bloc 30 et, d'autre part au bloc 34. Le contrôleur 42 indique les parties des blocs 30 et 34 qui devront être utilisées.

Le fonctionnement est le suivant :

Lors d'une connexion d'un terminal 40, le contrôleur 42 identifie le contexte technique à partir de l'adresse URL que le terminal a utilisé pour se connecter et en déduit la partie 34 du bloc à utiliser. Le contrôleur 42 fait appel dans le bloc 34 des contextes techniques, à la fonctionnalité permettant d'identifier le consommateur à partir d'informations fournies par l'opérateur de téléphonie mobile et ajoutées aux entêtes http.

Le contrôleur 42 identifie aussi le magasin à partir des données fournies par le terminal. Le contrôleur 42 identifie également la langue à utiliser, ainsi que le type de terminal à partir des en-têtes HTTP envoyés par le terminal ou en fonction du contexte technique.

Le contrôleur 42 identifie quelle page doit être envoyée au terminal et la partie du bloc 30 utilisée pour obtenir les données nécessaires à la génération de la page. Exceptionnellement, les données nécessaires à la génération de la page peuvent être obtenues dans le bloc 34, par exemple pour des fonctionnalités propres à un contexte technique et communes à tous les types de site, tels qu'un téléchargement du contenu après parcours du site).

Le contrôleur 42 délègue l'exécution des diverses opérations au générateur 44 de description de page.

Le générateur 44 de description de page exécute les fonctions suivantes :
- Déterminer le type de langage qui est supporté par le terminal en fonction du type de terminal et du contexte technique identifiés par le contrôleur 42 ; ce langage est, par exemple WML, xHTML, PML, etc.
- Obtenir l'en-tête dépendant du contexte technique.
- Obtenir à partir de la partie du bloc 30 identifiée par le contrôleur 42 l'en-tête, le corps et le pied de page.
- Obtenir le pied de page dépendant du contexte technique.

Le bloc 30 peut utiliser la base de donnée 23 pour déterminer le contenu du magasin 16 à mettre en avant dans un corps de page donné.

Lorsque les données ci-dessus ont été récupérées par le générateur 44, ce dernier fait appel aux gabarits correspondants qui se trouvent dans le bloc 30 de type de site et/ou aux gabarits se trouvant dans le bloc 34 relatif au contexte technique afin de générer la description de page.

## Revendications

1. Plateforme de distribution de contenus multimédias vers des terminaux de téléphonie mobile comportant :
- des moyens pour se connecter à au moins un élément, appelé entrepôt (14₁, 14₂...), dans lequel sont stockés des contenus multimédia destinés à des terminaux de téléphonie mobile, ces contenus étant du type logos, sonneries, chansons, musiques, paroles, programmes, images ou vidéo, programmes audiovisuels, chaque contenu étant stocké sous une pluralité de formes afin de pouvoir être livré à une pluralité correspondante de types de terminaux de téléphonie mobile, l'entrepôt comprenant un organe de recherche de contenu multimédia dans l'entrepôt,
- au moins un élément, appelé magasin (16), destiné à contenir des contenus multimédia provenant de l'entrepôt et comportant des moyens pour que ces contenus puissent être distribués à une pluralité de type de terminaux de téléphonie mobile, et
- au moins un organe de transport pour transporter des contenus multimédia sélectionnés, sous leurs divers formats, d'un entrepôt vers un magasin.

2. Plateforme selon la revendication 1 dans laquelle au moins certains des contenus multimédias sont stockés sous plusieurs niveaux de qualité

3. Plateforme selon la revendication 2 dans laquelle l'organe de transport est tel qu'il transfère chaque contenu multimédia sous ses divers niveaux de qualité.

4. Plateforme selon l'une des revendications 1 à 3 dans laquelle l'organe de transport est tel qu'il comporte des moyens pour que le transfert de contenus multimédia de l'entrepôt vers le magasin s'effectue en temps réel et de façon automatique en fonction de critères présélectionnés, ce transfert automatique étant de préférence effectué après confirmation par un opérateur.

5. Plateforme selon l'une des revendications précédentes comportant des moyens pour fournir des indicateurs relatifs à la distribution des contenus vers les terminaux de téléphonie mobile, ces indicateurs étant compris dans le groupe comportant : le nombre de distributions d'un contenu déterminé sur une période présélectionnée, le nombre de contenus d'une catégorie déterminée distribuée sur une période présélectionnée, la variation d'un nombre de distributions d'un contenu déterminé ou d'une catégorie déterminée par rapport à une période précédente, le nombre total de distributions sur une période déterminée, la variation de ce nombre par rapport à une période précédente, la part de la distribution de chaque contenu ou catégorie par rapport au nombre total de distributions, le nombre total de consultations des contenus du magasin par les consommateurs, le nombre de consultations de chaque contenu, la part de consultation de chaque contenu ou catégorie par rapport au nombre total de consultations, et un paramètre représentant, pour chaque catégorie ou catégorie de contenus, le rapport entre le nombre de consultations et le nombre de distributions.

6. Plateforme selon la revendication 5 dans laquelle le magasin comporte des moyens pour produire des alertes à partir d'au moins certains des indicateurs.

7. Plateforme selon l'une des revendications précédentes dans laquelle le magasin comporte des moyens pour effectuer au moins une des actions suivantes : ajouter des contenus, supprimer des contenus, déplacer des contenus d'une catégorie dans une autre, copie un contenu déjà présent dans une catégorie vers une autre catégorie, modifier l'ordre de présentation des contenus, établir une date à partir de laquelle un contenu sera présenté dans le magasin, et remplir une zone de présentation pour mettre en évidence certains contenus.

8. Plateforme selon l'une des revendications précédentes dans laquelle le magasin comporte des moyens pour déterminer des données relatives aux distributions effectuées par type de terminal mobile.

9. Plateforme selon l'une des revendications précédentes comportant des moyens pour recevoir un identifiant représentant le titulaire d'un terminal mobile et des moyens pour établir un profil de chaque consommateur en fonction des consultations ou acquisitions précédentes.

10. Plateforme selon la revendication 9, comprenant une base de données (23) dans laquelle sont stockés des profils de consommateurs avec les identifiants correspondants des terminaux mobiles et des moyens dans le magasin pour émettre vers les terminaux mobiles pour lesquels un profil a été établi, une information sur des produits correspondant au profil.

11. Plateforme selon l'une des revendications précédentes dans laquelle chaque magasin comporte des moyens pour permettre son accès par des terminaux de téléphonie mobile, ces moyens d'accès comprenant :
- une base de données contenant tous les types de sites et tous les contextes techniques par lesquels le magasin est accessible,
- des moyens pour déterminer le type de cible et le contexte technique sélectionnés par le terminal mobile en fonction des informations fournies par le terminal mobile lors de l'appel, et
- des moyens pour extraire de la base de données les informations relatives au type de cible et au contexte technique sélectionnés par le terminal mobile ;
les types de sites étant les gabarits qui s'affichent sur les écrans des terminaux mobiles et l'arborescence de navigation par laquelle le terminal mobile accède aux produits en magasin,
le contexte technique comprenant au moins un des éléments du groupe qui comporte : l'ensemble des contraintes se rapportant à l'ergonomie du magasin par rapport aux terminaux supportés ; les contraintes techniques liées au langage de description de pages pour les terminaux supportés ; le système de facturation des terminaux mobiles ; le mécanisme de distribution de contenus ; les terminaux supportés, et les mécanismes de compte rendu aux opérateurs de téléphonie mobile.

12. Procédé pour la création de magasins de plateforme selon l'une des revendications 1 à 11 dans lequel on fournit une base de données dans laquelle sont stockés :
- des architectures d'organisation de magasin,
- des types de sites,
- des contextes techniques de magasin,
et on sélectionne l'architecture, le type de site et le contexte technique dans cette base de données,
les types de sites étant les gabarits qui s'affichent sur les écrans des terminaux mobiles et l'arborescence de navigation par laquelle le terminal mobile accède aux produits en magasin,
le contexte technique comprenant au moins un des éléments du groupe qui comporte : l'ensemble des contraintes se rapportant à l'ergonomie du magasin par rapport aux terminaux supportés ; les contraintes techniques liées au langage de description de pages pour les terminaux supportés ; le système de facturation des terminaux mobiles ; le mécanisme de distribution de contenus ; les terminaux supportés, et les mécanismes de compte rendu aux opérateurs de téléphonie mobile.
